# EUROPEAN PATENT APPLICATION

(11) **EP 4 730 278 A1**
(43) Date of publication of application: **22.04.2026**
(21) Application number: 25204268.4
(22) Date of filing: 24.09.2025
(51) Int. Cl.: G06V 30/146, B42D 25/382, G06T 7/90, G06V 30/162, G06V 30/18, G07D 7/1205

(54) **METHODS AND SYSTEMS FOR EXTRACTING AN INFRARED SECURITY MARK FROM A DOCUMENT**

(30) Priority: 15.10.2024 US 202418915919
(71) Applicant: Xerox Corporation, Webster, NY 14580 (US)
(72) Inventor: GOPALAKRISHNAN, Sainarayanan, Webster, 14580 (US); KANAGASABAI, Rajasekar, Webster, 14580 (US); CHANDRAN, Haripriya, Webster, 14580 (US)
(74) Representative: Gill Jennings & Every LLP

(57) **Abstract**

The present disclosure discloses methods and systems for extracting an infrared (IR) security mark from a document. The method includes receiving a document including the IR security mark. A portion of the document including the IR security mark is extracted and a color information is obtained, wherein the color information includes at least one of a foreground color information and an adjacent foreground color information. One or more portions of the extracted portion are analyzed based on the foreground color information, to generate a foreground image including one or more foreground portions. One or more portions adjacent to the one or more foreground portions in the extracted portion are analyzed based on the adjacent foreground color information, to generate an adjacent foreground image. The foreground image and the adjacent foreground image are processed to extract the IR security mark.

## Description

### TECHNICAL FIELD

The present disclosure relates to the field of document security. More specifically, the disclosure relates to methods and systems for extracting an infrared (IR) security mark from a document.

### BACKGROUND

Organizations including government and non-government organizations employ various security techniques to prevent their confidential documents such as legal documents, research documents, contract documents, invoices, etc., from malicious activities, such as counterfeiting, forging, etc. One such technique for protecting confidential documents includes the use of infrared (IR) security marks that offer enhanced security.

Typically, the IR security marks are in the form of texts, images, signs, or the like. And, they are surrounded or hidden by a pattern such that the user cannot see it with the naked eye. Further, to read such security marks, devices such as IR scanners, IR cameras, or specific IR light sources are needed and this could increase the overall cost, could add dependency to the system, and so on. Techniques to allow regular scanners to read the infrared security marks are needed. There is a need for improved systems and methods that reduce the complexity level and computation resources.

### SUMMARY

According to aspects illustrated herein, a method for extracting an infrared (IR) security mark from a document is disclosed, the method includes receiving a document, including the IR security mark. Thereafter, a portion of the document including the IR security mark is extracted and a known color information is obtained, wherein the known color information includes at least one of a foreground color information and an adjacent foreground color information. Once obtained, one or more portions of the extracted portion are analyzed based on the foreground color information, to generate a foreground image including one or more foreground portions. Further, one or more portions adjacent to the one or more foreground portions in the extracted portion are analyzed, based on the adjacent foreground color information, to generate an adjacent foreground image. Thereafter, the foreground image and the adjacent foreground image are processed to extract the IR security mark for further analysis.

According to further aspects illustrated herein, a multi-function device for extracting an infrared (IR) security mark from a document is disclosed. The multi-function device includes a document receiver to receive a document from a user, wherein the document includes the IR security mark. Further, the multi-function device includes a security mark detection module for: extracting a portion of the document including the IR security mark; obtaining a known color information, wherein the known color information includes at least one of a foreground color information and an adjacent foreground color information; analyzing, based on the foreground color information, one or more portions of the extracted portion to generate a foreground image including one or more foreground portions; analyzing, based on the adjacent foreground color information, one or more portions adjacent to the one or more foreground portions in the extracted portion to generate an adjacent foreground image; and processing the foreground image and the adjacent foreground image to extract the IR security mark for further analysis.

According to furthermore aspects, a method for verifying authenticity of documents is disclosed. The method includes receiving a document, including an IR security mark. Thereafter, a portion of the document including the IR security mark is extracted and a known color information is obtained, wherein the known color information includes at least one of a foreground color information and an adjacent foreground color information. Once obtained, color intensity values of the one or more portions of the extracted portion are compared with the foreground color information to generate the foreground image including one or more foreground portions. Using the foreground image, one or more portions adjacent to the one or more foreground portions in the extracted portion are identified. Then, color intensity values of the identified one or more portions are compared with the adjacent foreground color information to generate the adjacent foreground image. Once generated, the foreground image and the adjacent foreground image are combined to create a new image, and the created new image is processed to extract the IR security mark. Finally, the extracted IR security mark is matched with one or more pre-stored reference security marks to verify authenticity of the document.

According to an additional aspects, a computing device for extracting an infrared (IR) security mark from a document is disclosed. The computing device is configured for: scanning a document, including the IR security mark; extracting a portion of the document including the IR security mark; obtaining a known color information, wherein the known color information includes at least one of a foreground color information and an adjacent foreground color information; analyzing, based on the foreground color information, one or more portions of the extracted portion to generate a foreground image including one or more foreground portions; analyzing, based on the adjacent foreground color information, one or more portions adjacent to the one or more foreground portions in the extracted portion to generate an adjacent foreground image; and processing the foreground image and the adjacent foreground image to extract the IR security mark for further analysis.

Other and further aspects and features of the disclosure will be evident from reading the following detailed description of the configurations, which are intended to illustrate, not limit, the present disclosure.

### BRIEF DESCRIPTION OF THE DRAWINGS

The illustrated embodiments of the subject matter will be best understood by reference to the drawings, wherein like parts are designated by like numerals throughout. The following description is intended as an example, and illustrates embodiments of devices, systems, and processes that are consistent with the subject matter as claimed herein.
FIG. 1 shows an environment in which various embodiments of the present disclosure can be practiced.
FIG. 2 is a block diagram illustrating various components of a multi-function device, in accordance with an embodiment of the present disclosure.
FIGS. 3A - 3F illustrate snapshots, in accordance with an embodiment of the present disclosure.
FIG. 4 illustrates a method flowchart for extracting an infrared (IR) security mark from a document, in accordance with an embodiment of the present disclosure.

### DESCRIPTION

A few aspects of the disclosed configurations are explained in detail below with reference to the various figures. Configurations are described to illustrate the disclosed subject matter, not to limit its scope, which is defined by the claims. Those of ordinary skill in the art will recognize a number of equivalent variations of the various features provided in the description that follows.

In various embodiments of the present disclosure, definitions of one or more terms that will be used in the document are provided below. For a person skilled in the art, it is understood that the definitions are provided just for the sake of clarity and are intended to include more examples in addition to the examples provided below.

The term "multi-function device" is a single device or a combination of multiple devices, to perform one or more functions such as, but not limited to, printing, scanning, copying, imaging, or the like. Further, the term also refers to include stand-alone scanning devices, such as scanners which can scan the document. The multi-function device may include software, hardware, firmware, or a combination thereof. In the context of the current disclosure, the multi-function device detects and extracts an infrared (IR) security mark embedded in a document to verify the genuineness or confidentiality of the document.

The term "document" refers to any document having confidential information or otherwise confidential for individual users, organizations, nations, or the like. Various examples of such confidential documents may be, but not limited to, cheques, legal documents, bank bonds, research data, contract documents, prescriptions, coupons, tickets, invoices, or disclosure documents. The document may include content in the form of text, images, graphics, or a combination thereof. The document is in physical form such as printed on paper.

The term "security mark" refers to a mark added/printed/embedded in the document to ensure its authenticity/genuineness/originality/confidentiality. One such example is an infrared (IR) security mark which is added to secure the document. The IR security mark can be in the form of texts, images, signs, or the like. Further, the IR security mark is surrounded or hidden by a pattern such that the user cannot see it with the naked eye. The pattern can be a dot pattern, solid color pattern or the like, and the pattern together with the security mark can be referred to as a patch or IR security patch.

The term "foreground portion" refers to one or more portions of the patch/IR security patch constituting the IR security mark, i.e., the portions constituting the embedded texts, images, signs, etc.

The term "adjacent foreground portion" refers to one or more portions of the patch/IR security patch that are adjacent to the foreground portions. In the context of the disclosure, one or more portions of the IR security patch that are located within a predefined distance from the foreground portions are considered adjacent foreground portions. In one example, the portions/pixels that are located next to the foreground portions are considered adjacent foreground portions. In another example, the portions/pixels that are located within a predefined distance of 2 pixels from the foreground portions are considered as adjacent foreground portions.

The term "known color information" refers to the color information of one or more portions of the IR security mark and/or patch. Specifically, the known color information includes the color intensity values of one or more pixels constituting the IR security mark (foreground portion), i.e., embedded texts, images, signs, etc., and the color intensity values of one or more pixels adjacent to the pixels constituting the IR security mark, i.e., adjacent foreground portion. In the context of the disclosure, color information of the pixels/portions constituting the IR security mark is referred as foreground color information. And, the color information of the pixels/portions adjacent to pixels/portions constituting the security mark is referred as adjacent foreground color information. Further, the color information includes color intensity values of the pixels and it can be in any suitable color space. In one configurations, the information includes color intensity values in CIELAB color space or L*a*b* color space where L* is for perceptual lightness and a* and b* are device-independent coordinates that can be converted from or into signals for the primary colors of human vision which include red, green, and blue (RGB); or for color spaces used in printing, e.g., cyan, magenta, yellow, and black (CMYK).

The term "extract" is a commonly known term (and technique) in this art and the term refers to obtaining or taking out of infrared security marks embedded in the document to verify the genuineness or confidentiality of the document.

The term "computing device" refers to a device that the user uses for various purposes such as calling, emails, work, or the like. Various examples of computing devices include but are not limited to, a mobile phone, a tablet, a laptop, a Personal Digital Assistant (PDA), a smartphone, or any other computing device capable of scanning the document. The computing device includes a camera/scanner which can scan and read the document.

The term "user" refers to include any user who submits the document at the multi-function device and/or an admin user. This user knows/understands color information, or other information relevant for implementing the present disclosure. In some implementations, this user obtains information through other ways such as other users.

The present disclosure discloses methods and systems for extracting an embedded infrared (IR) security mark from a document. The methods and systems extract the IR security mark using known color information which includes foreground color information and adjacent foreground color information. According to the disclosure, when a document is submitted for scanning at a scanning device, such as a multi-function device, the multi-function device extracts a portion of the document that may include the IR security mark. Thereafter, the multi-function device analyzes the extracted portion using the foreground color information and generates a first image which is referred as a foreground image. Further, the multi-function device analyzes the extracted portion using the adjacent foreground color information and generates a second image which is referred as an adjacent foreground image. Once generated, the multi-function device processes the foreground image and the adjacent foreground image to detect and extract the IR security mark embedded in the submitted document for further processing.

In one example, the multi-function device can analyze the IR security mark to ascertain its authenticity and accordingly classify the document as confidential or non-confidential. In another example, based on the processing of the extracted IR security mark, the multi-function device may notify an owner of the document or an admin user, and/or may abort the processing of the document if the document including the IR security mark is submitted for printing/scanning/copying.

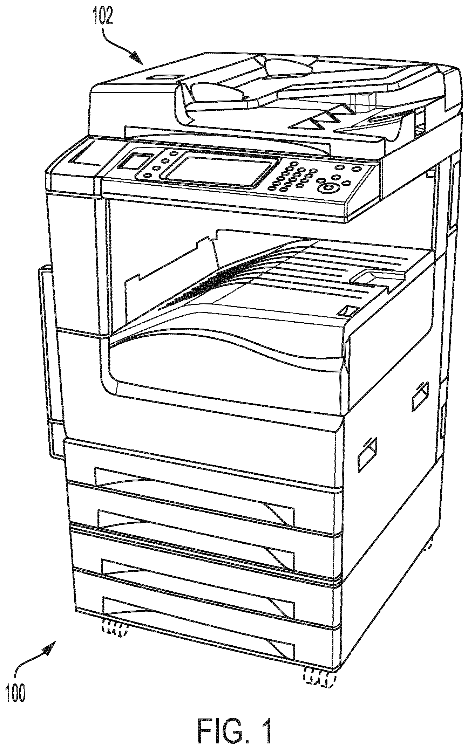

FIG. 1 shows an environment 100 in which various embodiments of the present disclosure can be practiced. The environment 100 includes a multi-function device 102 that provides one or more functionalities such as printing, scanning, imaging, copying, and so on. The multi-function device 102 as shown is one example. The environment 100 may include a scanner or any device with scanning functionality. The multi-function device 102 detects and extracts an infrared (IR) security mark from a document to verify characteristics such as, for example, but not limited to, genuineness, authenticity, and confidentiality of the document.

The document can be confidential or otherwise. Confidential documents include, but are not limited to including, checks, legal documents, bank bonds, research documents, contract documents, prescriptions, coupons, tickets, invoices, disclosure documents, and the like. The document includes content such as texts, images, graphics, or a combination thereof. In the context of the current disclosure, the document also includes one or more infrared (IR) security marks. The document can be a single-page document or a multi-page document. In one example, the document is a single-page document and the document includes an IR security mark. In another example, the document is a single-page document and the document includes multiple IR security marks located at different locations in the document. In yet another example, the document is a multi-page document and the IR security mark may be present on the pages of the document or may be present on a particular page of the document such as the starting page of the document, the last page of the document, or the like. In some configurations, the document includes an IR security mark. In some configurations, the document includes multiple IR security marks which are located at different locations in the document. The IR security mark can be in the form of texts, signs, images, or a combination thereof.

In some configurations, a user submits a document at the multi-function device 102. The document is in a physical form, such as printed on paper. Once received, the multi-function device 102 scans the document and extracts a portion of the document that may include the IR security mark. The multi-function device 102 obtains color information which includes foreground color information and adjacent foreground color information. The color information can be for example, but not limited to, obtained from the user and/or be pre-defined and pre-stored in the multi-function device 102. The multi-function device 102 analyzes the extracted portion using the color information.

In some configurations, the multi-function device 102 analyzes the extracted portion using the foreground color information and generates an image which is referred as a foreground image. The foreground image is a binary image wherein some portions/pixels, for example, but not limited to the white portions/pixels, correspond to foreground portions/pixels, i.e., the pixels/portion that constitute the security mark. Using the foreground image, the multi-function device 102 identifies the adjacent foreground portions, i.e., the portions adjacent to the foreground portions (portions that may constitute the security mark), in the extracted portion. The multi-function device 102 analyzes the adjacent foreground portions of the extracted portion using the adjacent foreground color information and generates a second image which is referred as an adjacent foreground image. The adjacent foreground image is also a binary image. The multi-function device 102 combines the foreground image and the adjacent foreground image to create a new image and reconstructs the pixels of the new image. Once reconstructed, the multi-function device 102 processes the reconstructed image to recognize the embedded IR security mark and identifies the characteristics such as, for example, but not limited to, genuineness and authenticity of the document. The multi-function device 102 extracts the IR security mark embedded in the document. Similarly, the multi-function device 102 can detect and extract multiple IR security marks embedded in a document.

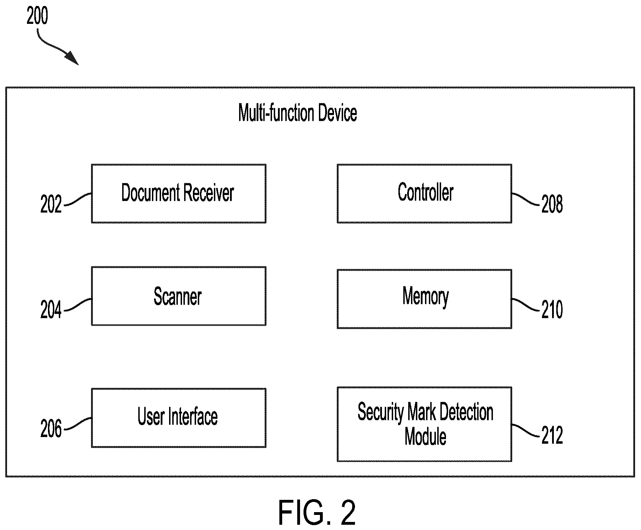

FIG. 2 is a block diagram illustrating various components of a multi-function device 200 for implementing the current disclosure. As shown, the multi-function device 200 includes a document receiver 202, a scanner 204, a user interface 206, a controller 208, a memory 210, and a security mark detection module 212. The security mark detection module 212 is shown as an independent module. The security mark detection module 212 can be a component of the controller 208, and the functionalities of the security mark detection module 212 can be performed by the controller 208. The components 202-212 are electronically connected, and communicate to perform various functions. The multi-function device 200 may include additional component(s).

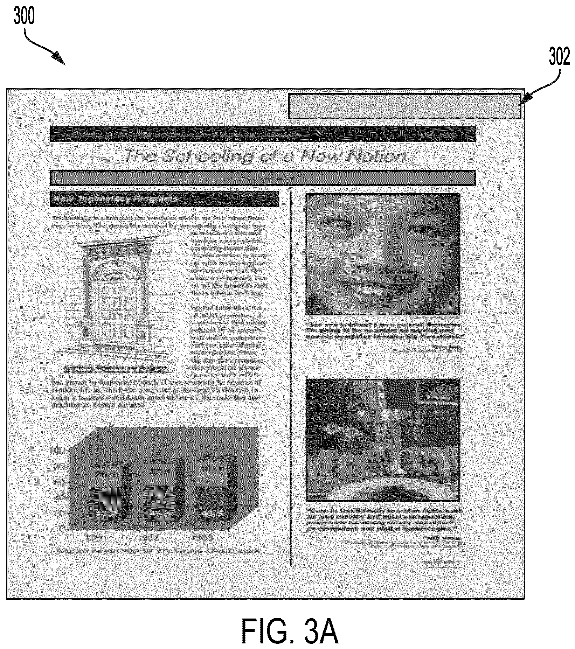

A user submits a document at the multi-function device 200 for processing. The document includes confidential content and one or more infrared (IR) security marks. The document can include an IR security mark, or the document can include multiple IR security marks located at one or more locations in the document. The IR security mark can be in the form of, for example, but not limited to, texts, images, signs, or a combination thereof. The IR security mark is surrounded or hidden by a pattern such that the user cannot see it with the naked eye. The pattern can be, for example, but not limited to, a dot pattern, solid color pattern, or the like, and collectively the pattern and the IR security mark can be referred to as a security patch or IR security patch. The confidential document can be a multi-page document and may include the IR security marks/patches on one or more pages of the confidential document. One such snapshot of a document such as 300 is shown in FIG. 3A. As illustrated, the document 300 includes content such as text, images, etc. The document 300 also includes a security patch 302. Further, the security patch 302 includes an IR security mark in the form of text, images, etc. (although not visible).

The user submits the document at the multi-function device 200 by placing the document at the document receiver 202 such as a platen or an automatic document handler (ADH). After submitting, the user accesses the user interface 206 of the multi-function device 200. The user interface 206 displays multiple options such as scan, print, workflow, copy, fax, and so on. The user interface 206 displays an option such as, for example, but not limited to, "security mark detection workflow". The option allows the user to detect the presence of the infrared (IR) security mark in the document. The user can select the option or by default, the multi-function device 200 enables the option. The user selects an option and initiates scanning of the document. In one example, the user initiates scanning by selecting a scan option presented on the user interface 206. Thereafter, the controller 208 triggers the scanner 204 to scan the document.

The scanner 204 scans the document and generates scanned data. The scanned data generated refers to raw scanned images generated post-scanning. The scanner 204 generates the scanned data in a color space/format for further processing. One such color space format is RGB (Red-Green-Blue) color space. The controller 208 sends the scanned data in the RGB color space to the security mark detection module 212 for further processing.

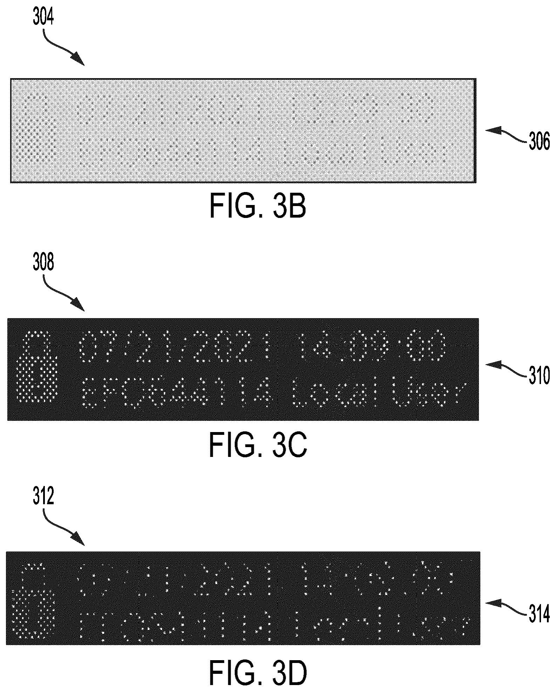

The security mark detection module 212 processes the scanned data to extract and recognize the embedded IR security mark. To accomplish this, post receiving, the security mark detection module 212 converts the received scanned data/image from the RGB color space to a LAB color space (International Commission on Illumination, Lightness, Red-Green Axis, Blue-Yellow Axis (CIELAB) color space). In LAB color space, color intensity value is expressed in three values, L* for perceptual lightness, and a* and b* for four colors, i.e., red, green, blue, and yellow. The security mark detection module 212 performs the blurring operation to reduce the noise and to decrease the inter-pixel distance between foreground halftone dots. The security mark detection module 212 performs the blurring operation using a kernel of a suitable size. In one example, the blurring is performed using a blur kernel of size 3*3. Thereafter, the security mark detection module 212 identifies a portion of the document that includes the IR security mark, specifically the IR security patch. The security mark detection module 212 performs the localization of the IR security patch to identify the location of the IR security patch in the scanned data. Here, the localization is performed using any known or later-developed methods. The security mark detection module 212 extracts the localized patch, i.e., the portion including the security mark. FIG. 3B illustrates a snapshot 304 of a portion/patch 306 including the IR security mark, although not visible, extracted from the document submitted at the multi-function device 200.

The security mark detection module 212 processes the extracted portion/patch and extracts the embedded IR security mark. The security mark detection module 212 performs the extraction using color information which is stored in the memory 210 of the multi-function device 200, for example. The color information includes foreground color information and adjacent foreground color information. The foreground color information includes predefined threshold color intensity values of one or more pixels/portions that may constitute the IR security mark (foreground portion), i.e., embedded text, image, or sign. The adjacent foreground color information includes predefined threshold color intensity values of the adjacent foreground portion, i.e., one or more portions/pixels adjacent to the pixels that may constitute the IR security mark.

The color intensity values can be defined in a color space and one such color space is L*a*b* (CIELAB) color space, RGB color space, etc. The color information or color intensity values can be in the form of a range, where corresponding to a channel, a pre-defined upper value and a lower value are defined. For example, for L-channel, L_upper and L_lower are defined, for a-channel, a_upper and a_lower are defined, and for b-channel, b_upper and b_lower are defined. The upper values, i.e., L_upper, a_upper, and b_upper indicate a higher value or upper limit for the respective channel, and the lower values, i.e., L_lower, a_lower, and b_lower indicate the lower limit or lower value for the respective channels. The color intensity values can be fixed values, and a threshold deviation value is defined corresponding to a color channel. For example, the color intensity values are L1 (for L channel), a1 (for a channel), b1 (for b channel) and corresponding deviation values are +/-0.2 (for L channel), +/-3 (for a channel), and +/- 1 (for b channel), respectively. The color information can be defined in the form of a range. Additionally, the color information can be pre-stored in the memory 210 or can be provided/input by the user, for example. In one example, the color information is pre-defined and pre-stored in the memory 210 of the multi-function device 200, for example, but not limited to, by a user, such as an admin user. In another example, the user can provide/input the known color information via the user interface 206 while submitting the document.

The security mark detection module 212 analyzes the extracted patch/portion using the foreground color information to identify the foreground pixels or the pixels constituting the security mark. The security mark detection module 212 compares the color intensity values of the pixels of the extracted portion/patch with the foreground color information. The security mark detection module 212 compares the color intensity values in a channel of a pixel with the threshold values defined for the corresponding channel in the foreground color information. For example, if the color intensity values for a pixel constituting the patch are L1 (for L channel), a1 (for a channel), and b1 (for b channel) and the pre-defined threshold values included in the foreground color information are L_lower and L_upper (for L channel), a_lower and a_upper (for a channel), b_lower and b_upper (for b channel). The security mark detection module 212 compares L1 with the corresponding threshold values included in the foreground color information, i.e., L_lower and L_upper. The security mark detection module 212 compares a1 with the a_lower and a_upper, and b1 with the b_lower and b_upper.

Based on the comparison, the security mark detection module 212 sets the values of the pixels of the extracted patch as 0 or 255. For instance, if the intensity value of the pixel in a channel lies within the threshold value defined for the respective channel in the foreground color information, the security mark detection module 212 sets the value of the pixel as '255', else as '0'. In one example, the color intensity values for a pixel are L1, a1, b1 and threshold values included in the foreground color information are L_lower, L_upper, a_lower, a_upper, b_lower and b_upper. The security mark detection module 212 checks whether L_lower < L1 < L_upper, a_lower < a1 < a_upper, and b_lower < b1 < b_upper, if the condition satisfies, the security mark detection module 212 sets the value of the pixel as 255, else as 0.

The security mark detection module 212 generates a first binary image which is referred as a foreground image. In the foreground image, a pre-defined set of pixels, for example, but not limited to, the white pixels, i.e., pixels with value 255, correspond to the pixels for which the intensity values lie within the pre-defined threshold limits and the remaining pixels are black pixels, i.e., the value is set as 0. The security mark detection module 212 identifies the pre-defined set of pixels as foreground pixels. The security mark detection module 212 analyzes the extracted patch using the foreground color information, generates the foreground image and identifies the foreground pixels, i.e., pixels constituting the security mark or the pre-defined sets of pixels. FIG. 3C illustrates one snapshot 308 of a foreground image 310. Upon analyzing the extracted patch 306 of FIG. 3B using the foreground color information, the security mark detection module 212 generates the foreground image 310.

The security mark detection module 212 analyzes the extracted/localized patch using the adjacent foreground color information. The security mark detection module 212 analyzes the pixels that are adjacent to the foreground pixels in the extracted patch. The security mark detection module 212 first identifies the adjacent foreground pixels or pixels adjacent to the foreground pixels. The security mark detection module 212 uses the foreground image and identifies the foreground pixels in the extracted patch, i.e., pixels of the extracted patch corresponding to the pre-defined pixels in the foreground image. Once identified, the security mark detection module 212 identifies the pixels that are adjacent to the foreground pixels in the extracted patch. In one example, the security mark detection module 212 considers the pixels as adjacent foreground pixels, if the pixels are located next to the foreground pixels in the extracted patch. In another example, the security mark detection module 212 considers the pixels as adjacent foreground pixels that are located at a distance of 2 pixels or less than 2 pixels from the foreground pixels in the extracted patch. Once the adjacent foreground pixels, i.e., pixels adjacent to the foreground pixels, in the extracted patch are identified, the security mark detection module 212, sets the value of the remaining pixels of the extracted patch as '0'.

The security mark detection module 212 analyzes the identified adjacent foreground pixels, i.e., pixels adjacent to the foreground pixels. The security mark detection module 212 compares the color intensity values of the adjacent foreground pixels with the known adjacent foreground color information. The security mark detection module 212 compares the color intensity values in a channel of the identified adjacent foreground pixels with the pre-defined threshold values of the corresponding channel in the adjacent foreground color information.

Based on the comparison, the security mark detection module 212 sets the value of the identified adjacent foreground pixels as 0 or 255. For instance, if the color intensity value of the adjacent foreground pixel in a channel lies within the predefined threshold values of the channel in the adjacent foreground color information, the security mark detection module 212 sets the value of the pixel as '255', else as '0'. In one example, if the color intensity values for a pixel are L2, a2, b2 and pre-defined threshold values included in the adjacent foreground color information are L_lower, L_upper, a_lower, a_upper, b_lower and b_upper. Then, the security mark detection module 212 checks whether L_lower < L2 < L_upper, a_lower < a2 < a_upper, and b_lower < b2 < b_upper, if the condition satisfies, the security mark detection module 212 sets the value of the pixel as 255, else as 0.

The security mark detection module 212 generates another binary image which is referred to as an adjacent foreground image. In the adjacent foreground image the pre-defined pixels, such as, for example, but not limited to, white pixels i.e., pixels with value 255, correspond to the pixels that are adjacent to the foreground pixels and for which the intensity value satisfies the threshold criteria, i.e., the value lies within the pre-defined threshold limits, and the remaining pixels are black, i.e., the value is set as 0. This way, the security mark detection module 212 analyzes the extracted patch using the adjacent foreground color information and generates the adjacent foreground image. FIG. 3D illustrates one such snapshot 312 of an adjacent foreground image 314.

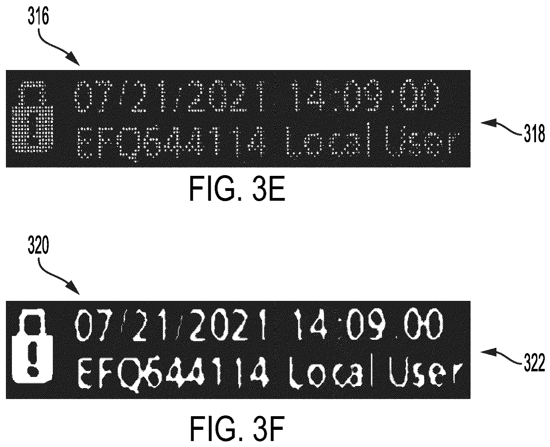

The security mark detection module 212 combines the foreground image and the adjacent foreground image to create a new image. In one example, the security mark detection module 212 combines the foreground image and the adjacent foreground image using the binary OR operation (bitwise OR operation). FIG. 3E illustrates one such snapshot 316 of a combined image 318. The security mark detection module 212 combines the foreground image 310 of FIG. 3C and adjacent foreground image 314 of FIG. 3D, and generates another image 318.

The security mark detection module 212 reconstructs the pixels, specifically the pre-defined pixels of the new image to enhance the security mark portions and recognize the security mark. The security mark detection module 212 performs the reconstruction using pixel shifting operation. FIG. 3F illustrates a snapshot 320 of a reconstructed image 322. The security mark detection module 212 reconstructs the pixels of the image 318 of FIG. 3E using the pixel shift operation, and generates the reconstructed image 322.

The security mark detection module 212 recognizes the security mark and compares the recognized security mark with one or more pre-stored reference security marks to verify characteristics such as, but not limited toed, the authenticity and/or genuineness of the IR security mark that determines the characteristics of the confidential document. T

Continuing with FIG. 2 description, the user interface 206 as shown is a part of the multi-function device 200. The user interface 206 can be an external display or device that can be connected to the multi-function device 200. The user interface 206 displays various options to receive user input, e.g., scan, print, color information, etc. The user interface 206 may display various options to receive various inputs from the user. In one example, the user interface 206 displays the result of the identification of the characteristics of the confidential document.

The memory 210 stores relevant information for implementing the current disclosure. For example, the memory 210 stores the color information. The memory 210 maintains a repository of security marks. Details stored in the memory 210 may be retrieved by the IR security mark detection module 212 or other components.

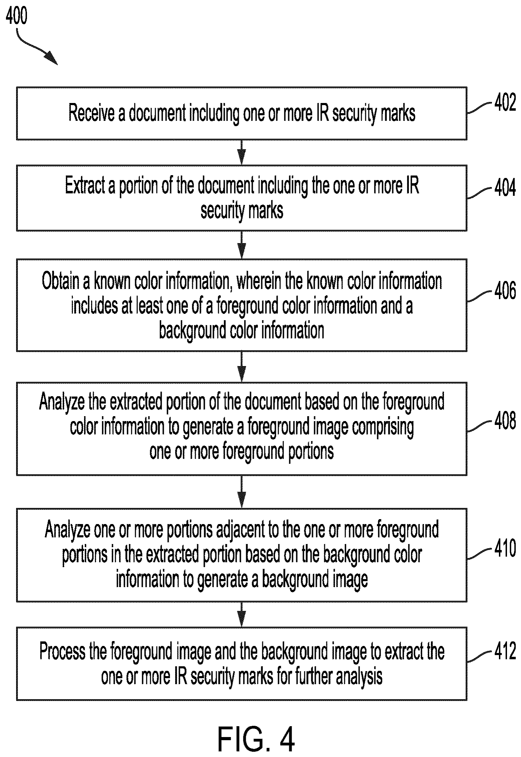

FIG. 4 is a method 400 for extracting infrared (IR) security marks from a document. The method 400 may be implemented at a multi-function device, such as the multi-function device 102 of FIG. 1, or the multi-function device 200 of FIG. 2. The method 400 can be implemented at any equivalent device with functionalities such as scanning, and so on.

The method 400 begins when a user wishing to identify the authenticity/genuineness of a document submits a document at the multi-function device for further processing.

Once submitted, at 402, a document including an IR security mark is received. The document includes confidential content and the infrared (IR) security mark. The security mark can be in the form of texts, images, signs, or a combination thereof. The security mark is surrounded or hidden by a pattern such that the user cannot see it with the naked eye. The pattern can be a dot pattern, solid color pattern, or the like, and collectively the pattern and the security mark may be referred to as a patch or IR patch. The confidential document can be a multi-page document and may include the IR security mark on one or more pages of the confidential document. Multiple options such as scan, print, workflow, copy, fax, and so on, are displayed to the user. An option such as, for example, but not limited to, "security mark detection workflow" is displayed to the user which allows the user to detect the presence of the infrared security mark and to verify the genuineness/authenticity of the document. The user selects the option. The document is scanned and scanned data are generated. The generated scanned data can be in, for example, but not limited to, a color space/format. A color space format is RGB (Red-Green-Blue) color space.

Once generated, at 404, a portion of the scanned data (scanned document) including the IR security mark is extracted. The received scanned data in the RGB color space is converted to a LAB color space (CIELAB color space). The blurring operation is performed using a blur kernel of a suitable size. In one example, the blurring is performed using a blur kernel of size 3*3. A portion of the document that may include the IR security mark, specifically the IR patch is localized and extracted. Localization of the security patch is performed to identify the location of the IR security mark in the scanned data. The localization is performed using any known or later-developed methods. The localized patch, i.e., the portion including the security mark is extracted.

At 406, color information is obtained. The color information includes foreground color information and adjacent foreground color information. The foreground color information includes predefined threshold color intensity values of one or more portions/pixels that may constitute the security mark and the adjacent foreground color information includes predefined threshold color intensity values of one or more portions/pixels adjacent to the portions/pixels that may constitute the security mark. The predefined threshold color intensity values can be defined in a color space and one such color space is L*a*b* (CIELAB) color space, RGB color space, etc. The color information or intensity values can be in the form of a range, where corresponding to a channel a pre-defined upper value and a lower value are defined. For example, for L channel, L_upper and L_lower are defined, for a channel, a_upper and a_lower are defined, and for b channel b_upper and b_lower are defined. The color information can be pre-stored or can be provided/input by the user.

When the color information is obtained, at 408, the extracted/localized patch is processed using the foreground color information to generate a foreground image and identify foreground portions/pixels, i.e., the pixels constituting the security mark. The color intensity values of the pixels of the extracted patch are compared with the foreground color information. The color intensity values in a channel of a pixel are compared with the threshold value defined for the corresponding channel in the foreground color information. For example, if the color intensity values for a pixel constituting the patch are L1 (for L channel), a1 (for a channel), and b1 (for b channel) and the pre-defined threshold values included in the foreground color information are L_lower and L_upper (for L channel), a_lower and a_upper (for a channel), b_lower and b_upper (for b channel). Then, L1 is compared with the corresponding threshold values included in the foreground color information, i.e., L_lower and L_upper. a1 is compared with the a_lower and a_upper, and b1 is compared with the b_lower and b_upper. Based on the comparison, the color intensity values of the pixels of the patch are set as either '0' or '255'. For instance, if the color intensity value of the pixel in a channel lies within the threshold values defined for the respective channel in the foreground color information, the value of the pixel is set as '255', else as '0'. A first binary image is generated which is referred as foreground image. In the foreground image, the pre-defined pixels, such as white pixels, i.e., pixels with value 255 correspond to the pixels for which the color intensity value lies within the pre-defined threshold limits and the remaining pixels are black pixels, i.e., the value is set as 0. Further, the pre-defined pixels, e.g., pixels with value 255, are identified as the foreground pixels. The extracted patch is processed using the foreground color information and the foreground image is generated, and foreground pixels or the pixels constituting the security mark are identified.

When the foreground pixels are identified, at 410, the extracted patch/portion is again processed using the adjacent foreground color information. The pixels adjacent to the foreground pixels of the extracted patch are analyzed. The adjacent foreground pixels are identified. The foreground image is used and the foreground pixels are identified in the extracted patch, i.e., pixels of the extracted patch corresponding to the pre-defined pixels in the foreground image. When the adjacent foreground pixels, i.e., the pixels adjacent to the foreground pixels in the extracted patch are identified, the values of the remaining pixels are set as '0'. The identified adjacent foreground pixels of the localized patch are analyzed. The color intensity values of the identified adjacent foreground pixels are compared with the known adjacent foreground color information. As explained earlier, the color intensity values in a channel of the adjacent foreground pixels are compared with the pre-defined threshold values of the corresponding channel in the adjacent foreground color information. Based on the comparison, color intensity values of the identified adjacent foreground pixels of the patch are set as '0' or '255'. For instance, if the color intensity value of the identified adjacent foreground pixel in a channel lies within the predefined threshold values of the respective channel in the adjacent foreground color information, the value of the pixel is set as '255', else as '0'.

Another binary image or second binary image is generated which is referred to as an adjacent foreground image. In the adjacent foreground image the pre-defined pixels, e.g., pixels with value 255, correspond to the pixels which are adjacent to the pixels constituting the security mark (foreground pixels) and for which the color intensity value satisfies the threshold criteria, i.e., the value lies within the pre-defined threshold limits, and the remaining pixels are pixels with a different pre-defined value, e.g., the value is set as 0. The extracted patch is processed using the adjacent foreground color information and the adjacent foreground image is generated.

At 412, the foreground image and the adjacent foreground image are analyzed. The foreground image and the adjacent foreground image are combined using the binary OR operation (bitwise) and a new image is generated. The pixels of the new image, specifically the pre-defined pixels of the new image are reconstructed. The reconstruction is performed to recognize the security mark. The reconstruction can be performed using pixel shifting operation. Once reconstructed, the security marks are recognized and the recognized security marks are compared with one or more pre-stored reference security marks to verify the authenticity/genuineness of the IR security mark that further determines the authenticity/genuineness of the confidential document. The infrared security mark is extracted and detected, and the authenticity of the confidential document including the IR security mark is determined.

The methods and systems focus on extracting an embedded infrared security mark using color information. The methods and systems provide a simple and less computation-intensive approach to extract and detect the embedded infrared security marks.

The present disclosure discloses methods and systems for extracting an embedded infrared (IR) security mark from a document using color information which includes foreground color information and adjacent foreground color information. A scanned image is segmented into a foreground image and an adjacent foreground image using the foreground color information and the adjacent foreground color information, respectively. The foreground image and the adjacent foreground image are combined using simple OR operation (bitwise OR operation) and finally, the pixels are reconstructed to extract and detect the embedded security mark. The solution allows scanners/multi-function devices to read infrared security marks, and assists in automating a print or scan path.

The order in which the method is described is not intended to be construed as a limitation, and any number of the described method blocks can be combined in any order to implement the method or alternate methods. Additionally, individual blocks may be deleted from the method. Furthermore, the method can be implemented in any suitable hardware, software, firmware, or combination thereof.

Although the disclosure is discussed with respect to a multi-function device/scanner, but the disclosure may be implemented on a computing device with scanning capabilities. In such a scenario, after scanning the document, the computing device extracts a portion of the document that may include the IR security mark. Thereafter, the computing device analyzes the extracted portion using the foreground color information and generates a first image which is referred to as a foreground image. The computing device analyzes the extracted portion using the adjacent foreground color information and generates a second image which is referred as an adjacent foreground image. The computing device processes the foreground image and the adjacent foreground image to detect and extract the IR security mark for further processing.

Note that throughout the following discussion, numerous references may be made regarding servers, services, engines, modules, interfaces, portals, platforms, or other systems formed from computing devices. It should be appreciated that the use of such terms is deemed to represent one or more computing devices having at least one processor configured to or programmed to execute software instructions stored on a computer readable tangible, non-transitory medium or also referred to as a processor-readable medium. For example, a server can include one or more computers operating as a web server, database server, or other type of computer server in a manner to fulfill described roles, responsibilities, or functions. Within the context of this document, the disclosed devices or systems are also deemed to comprise computing devices having a processor and a non-transitory memory storing instructions executable by the processor that cause the device to control, manage, or otherwise manipulate the features of the devices or systems.

A system and method in accordance with embodiments of the present disclosure relate to an apparatus for performing the operations discussed herein. This apparatus may include a computer program. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and coupled to a computer system bus. A variety of programming languages may be used to implement the teachings as described herein.

The methods illustrated throughout the specification, may be implemented in a computer program product that may be executed on a computer. The computer program product may comprise a non-transitory computer-readable recording medium on which a control program is recorded, such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

The terminology used herein is for the purpose of describing particular embodiments and is not intended to be limiting of the disclosure. It will be appreciated that several of the above disclosed and other features and functions, or alternatives thereof, may be combined into other systems or applications. Various presently unforeseen or unanticipated alternatives, modifications, variations, or improvements therein may subsequently be made by those skilled in the art without departing from the scope of the present disclosure as encompassed by the following claims.

The claims, as originally presented and as they may be amended, encompass variations, alternatives, modifications, improvements, equivalents, and substantial equivalents of the embodiments and teachings disclosed herein, including those that are presently unforeseen or unappreciated, and that, for example, may arise from applicants/patentees and others.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A method for extracting an infrared (IR) security mark from a document, the method comprising:
receiving the document, the document including the IR security mark;
extracting a portion of the document, the portion including the IR security mark;
obtaining color information from the portion, wherein the color information includes at least one of a foreground color information and an adjacent foreground color information;
analyzing, based on the foreground color information, one or more foreground parts of the portion;
generating a foreground image including the one or more foreground parts;
analyzing, based on the adjacent foreground color information, one or more adjacent parts adjacent to the one or more foreground parts in the portion;
generating an adjacent foreground image including the one or more adjacent parts; and
extracting the IR security mark from the foreground image and the adjacent foreground image.

2. The method of claim 1, wherein analyzing, based on the foreground color information, comprises:
comparing color intensity values of the one or more foreground parts of the portion with the foreground color information.

3. The method of claim 1 or claim 2, wherein analyzing, based on the adjacent foreground color information, comprises:
identifying, using the foreground image, the one or more adjacent parts in the portion; and
comparing color intensity values of the identified one or more adjacent parts with the adjacent foreground color information.

4. A multi-function device for extracting an infrared (IR) security mark from a document, the multi-function device comprising:
a document receiver for receiving the document, wherein the document includes the IR security mark;
a security mark detection module executing instructions that perform operations including:
extracting a portion of the document, the portion including the IR security mark;
obtaining color information from the portion, wherein the color information includes at least one of a foreground color information and an adjacent foreground color information;
analyzing, based on the foreground color information, one or more foreground parts of the portion;
generating a foreground image including the one or more foreground parts;
analyzing, based on the adjacent foreground color information, one or more adjacent parts adjacent to the one or more foreground parts in the portion;
generating an adjacent foreground image including the one or more adjacent parts; and
extracting the IR security mark from the foreground image and the adjacent foreground image.

5. The multi-function device of claim 4, wherein the color information comprises:
predefined color intensity values.

6. The multi-function device of claim 4 or claim 5, wherein analyzing based on the foreground color information comprises comparing color intensity values of the one or more foreground parts of the portion with the foreground color information.

7. The multi-function device of any of claims 4 to 6, wherein analyzing based on the adjacent foreground color information comprises:
identifying, using the foreground image, the one or more adjacent parts to the one or more foreground parts in the portion; and
comparing color intensity values of the identified one or more adjacent parts with the adjacent foreground color information.

8. The multi-function device of any of claims 4 to 7, wherein the foreground image and the adjacent foreground image comprise binary images.

9. A method for verifying authenticity of documents, the method comprising:
receiving the document, the document including an IR security mark;
extracting a portion of the document, the portion including the IR security mark;
obtaining color information from the portion, wherein the color information includes at least one of a foreground color information and an adjacent foreground color information;
comparing foreground color intensity values of one or more foreground parts of the portion with the foreground color information to generate a foreground image including the one or more foreground parts;
identifying, using the foreground image, one or more adjacent parts to the one or more foreground parts in the portion;
comparing adjacent color intensity values of the identified one or more adjacent parts with the adjacent foreground color information to generate an adjacent foreground image;
combining the foreground image and the adjacent foreground image to create a new image;
extract the IR security mark from the created new image; and
matching the extracted IR security mark with one or more pre-stored reference security marks to verify the authenticity of the document.

10. The method of claim 1 or claim 9, wherein the color information comprises predefined threshold color intensity values.

11. The method of claim 1 or claim 9 or claim 10, wherein the foreground image comprises:
a binary image including one or more pre-defined pixels, wherein the pre-defined pixels correspond to the foreground parts for which the foreground color intensity values match with the foreground color information.

12. The method of claim 1 or any of claims 9 to 11, wherein the adjacent foreground image comprises:
a binary image including one or more pre-defined pixels, wherein the pre-defined pixels correspond to the one or more adjacent parts to the one or more foreground parts in the portion and for which the adjacent color intensity values match with the adjacent foreground color information.

13. A computing device for extracting an infrared (IR) security mark from a document, the computing device executing instructions that perform operations, the operations comprising:
scanning the document, the document including the IR security mark;
extracting a portion of the document, the portion including the IR security mark;
obtaining color information from the portion, wherein the color information includes at least one of a foreground color information and an adjacent foreground color information;
analyzing, based on the foreground color information, one or more foreground parts of the portion;
generating a foreground image including the one or more foreground parts;
analyzing, based on the adjacent foreground color information, one or more adjacent parts adjacent to the one or more foreground parts in the portion;
generating an adjacent foreground image including the one or more adjacent parts; and
extracting the IR security mark from the foreground image and the adjacent foreground image.

14. The computing device of claim 13, wherein analyzing, based on the foreground color information, comprises:
comparing color intensity values of the one or more foreground parts of the portion with the foreground color information.

15. The computing device of claim 13 or claim 14, wherein analyzing, based on the adjacent foreground color information, comprises:
identifying, using the foreground image, the one or more adjacent parts in the portion; and
comparing color intensity values of the identified one or more adjacent parts with the adjacent foreground color information.
